# EUROPÄISCHE PATENTSCHRIFT

(11) **EP 2 078 590 B1**
(45) Veröffentlichungstag und Bekanntmachung des Hinweises auf die Patenterteilung: **06.08.2014**
(21) Anmeldenummer: 09000080.3
(22) Anmeldetag: 07.01.2009
(51) Int. Cl.: B23P 19/06, B25B 21/00

(54) **Schraubvorrichtung und Verfahren zum Überwachen von Schraubvorgängen**
Screwing device and method for monitoring screwing processes
Dispositif de vissage et procédé de surveillance de processus de vissage

(30) Priorität: 09.01.2008 DE 102008004572
(43) Veröffentlichungstag der Anmeldung: 15.07.2009
(73) Patentinhaber: C. & E. Fein GmbH, 73529 Schwäbisch Gmünd-Bargau (DE)
(72) Erfinder: Hofer, Thomas, 73453 Abtsgmünd (DE); Lippek, Peter, 73540 Heubach (DE)
(74) Vertreter: Gahlert, Stefan

(56) Entgegenhaltungen:
- WO-A2-2007/044558
- DE-A1- 3 327 964
- DE-A1- 19 639 566
- DE-A1- 19 843 162
- DE-A1- 19 961 374
- DE-U1-202006 014 606

## Beschreibung

Die Erfindung betrifft ein Verfahren zum Überwachen von Schraubvorgängen, bei denen mittels eines Schraubwerkzeuges eine Verschraubung hergestellt wird, und bei dem eine Identifizierung mindestens eines zu verschraubenden Objektes mittels optischer Bildverarbeitung erfolgt, wobei eine Codierung auf dem Objekt oder in der Umgebung des Objektes ausgewertet wird.

Die Erfindung betrifft ferner eine Schraubvorrichtung, mit einem Schrauber zum Verschrauben mindestens zweier Objekte, und mit einer optischen Bilderfassungseinrichtung zur Idnetifizierung mindestens eines zu verschraubenden Objektes.

Ein derartiges Verfahren und eine derartige Vorrichtung sind aus der DE 33 27 964 A1 bekannt.

Hierbei wird zur Identifizierung von Verbindungsschrauben nach Typ bzw. Anziehvorschrift vorgeschlagen, einen Code in Form von Strichen, Punkten oder Strich-Punkt-Kombinationen mit Hilfe einer Leseeinrichtung auszuwerten.

Gemäß der DE 199 61 374 A1 wird zur Identifizierung von Schraubverbindungen eine Strichcode-Leseeinheit oder eine Magnetkarten-Leseeinheit verwendet.

Gemäß der DE 20 2006 014 606 U1 wird zur Identifizierung einer Schraubverbindung eine Scaneinrichtung zum Abtasten eines Barcodes verwendet.

Gemäß der WO 2007/044558 A2 ist ein Bedienerführungssystem für Fertigungssysteme bekannt, bei dem ein Sensor in Form eines Näherungsschalters, eines Lichtvorhangs, eines Barcode-Lesers oder HF-Transponders verwendet wird.

Derartige Identifizierungsmöglichkeiten sind zwar grundsätzlich geeignet, um eine Identifizierung von Objekten zu erlauben, bieten jedoch entweder keine zuverlässige Erkennungsmöglichkeit oder sind relativ teuer, wie zum Beispiel im Fall von HF-Transpondern.

In der industriellen Serienmontage werden zunehmend Schraubverbindungen verwendet. Für eine einwandfreie Funktion der Schraubverbindung ist es notwendig, dass die Qualität der ausgeführten Verschraubung überwacht wird, wozu Kontrollgrößen wie Drehmoment und/oder Drehwinkel erfasst werden. Die per Messtechnik ermittelten Kontrollwerte werden dem Arbeiter angezeigt und/oder an ein Kontroll-/Überwachungssystem übermittelt.

In der industriellen Montage werden z.B. bei der Montage von Automobilen eine Vielzahl von Verschraubungen an unterschiedlichen Orten einer Karosserie erstellt. Hierbei muss gewährleistet werden, dass eine korrekte Zuordnung der Verschraubungen erfolgt, da unterschiedliche Verschraubungen teilweise stark in ihrer Parameterwahl voneinander abweichen können. Insbesondere wenn Handwerkzeuge zur Herstellung der Schraubverbindungen benutzt werden und wenn eine Vielzahl von Verschraubungen an einem Werkstück erzeugt werden sollen, ist eine korrekte Erfassung der Schraubstelle schwierig zu realisieren. Bei drahtlosen Schraubern ist darüber hinaus, im Gegensatz zu drahtgebundenen Schraubern, bedingt durch die Kabellänge, ein deutlich vergrößerter Einsatzbereich leichter ermöglicht, welcher die korrekte Erfassung der Schraubstellen zusätzlich erschwert.

Es sind zwar im Stand der Technik grundsätzlich verschiedene Verfahren zur Positionserfassung zur Objektverfolgung insbesondere von Elektrowerkzeugen bekannt, jedoch handelt es sich hierbei in der Regel um Positionserfassungssysteme, die eine Relativerfassung von bewegten Objekten, wie Elektrowerkzeugen, ermöglichen (vgl. DE 103 12 154 A1, DE 10 2004 046 000 A1, DE 199 01 334 A1). Hierzu werden meist Inertialsensoren, Drehratensensoren, Beschleunigungssensoren eingesetzt. Aus der DE 42 25 112 C1 ist ferner eine Einrichtung zum Messen der Position eines Instrumentes relativ zu einem Behandlungsobjekt bekannt, bei der auch eine Inertialsensoreinheit zur Positionsbestimmung verwendet wird.

Diese Systeme sind einerseits sehr kompliziert, vergleichsweise teuer und sind andererseits nur zur Lageerfassung eines bewegten Werkzeuges geeignet. Eine Identifizierung verschiedenartiger Schraubstellen an unterschiedlichen Orten eines Werkstücks, an dem verschiedene Verschraubungen realisiert werden sollen, ist hiermit nicht möglich.

Der Erfindung liegt somit die Aufgabe zugrunde, ein Verfahren zur Überwachung von Schraubvozgängen und eine Schraubvorrichtung zu schaffen, womit auch bei einer Vielzahl von Schraubstellen an einem Werkstück eine korrekte Zuordnung zu dem jeweiligen Ort einer zu erstellenden Verschraubung gewährleistet ist und eine sichere und kostengünstige Identifizierung gewährleistet ist.

Diese Aufgabe wird mit dem Verfahren gemäß Patentanspruch 1 gelöst.

Die Aufgabe wird ferner mit einer Vorrichtung gemäß Patentanspruch 5 gelöst.

Erfindungsgemäß wird durch den Einsatz von optischer Bildverarbeitung und die Verwendung eines speziellen Codes in Form eines DataMatric-Codes eine besonders sichere Erkennung gewährleistet, da der DataMatrix-Code einen integrierten Algorithmus zur Fehlerkorrektur aufweist und eine Codeerkennung aus unterschiedlichen Richtungen möglich ist.

Mit dem erfindungsgemäßen Verfahren und der erfindungsgemäßen Vorrichtung kann elektromagnetische Strahlung im sichtbaren oder im nicht sichtbaren Bereich ausgewertet werden.

Im Falle der Verwendung einer nicht sichtbaren Codierung kann es sich beispielsweise um eine Codierung handeln, die nach Beleuchtung mit UV-Licht erfassbar ist.

Bei der erfindungsgemäßen Vorrichtung ist in vorteilhafter Weise eine Kamera zur Auswertung mindestens eines Merkmals eines zu verschraubenden Objektes oder in der Umgebung des zu verschraubenden Objektes vorgesehen.

Die Kamera erlaubt vorzugsweise die Auswertung mindestens eines Merkmals eines zu verschraubenden Objektes oder in der Umgebung des zu verschraubenden Objektes. Hierbei wird eine Codierung auf dem Objekt oder in der Umgebung des Objektes ausgewertet, wobei es sich um einen DataMatrix-Code handelt,

Die Kamera kann zur Auswertung von elektromagnetischer Strahlung im nicht sichtbaren Bereich oder im sichtbaren Bereich ausgebildet sein.

Vorzugsweise handelt es sich um eine Codierung, die nach Beleuchtung mit UV-Licht erfassbar ist. Hierbei kann die Codierung eine UV-Farbe aufweisen.

Gemäß einer weiteren Ausgestaltung der erfindungsgemäßen Vorrichtung ist eine Ring-Beleuchtungseinrichtung vorgesehen, die vorzugsweise am Schrauber aufgenommen ist.

Auf diese Weise wird eine besonders gleichmäßige Ausleuchtung des zu überwachenden Ortes ermöglicht.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Es zeigen:
- Figur 1: eine schematische Darstellung eines Werkstückes, an dem eine Verschraubung erzielt werden soll, zusammen mit einem handgehaltenen Schraubwerkzeug und einer winklig dazu angeordneten Kamera;
- Figur 2: eine Aufsicht auf das Werkzeug gemäß Figur 1 von oben.

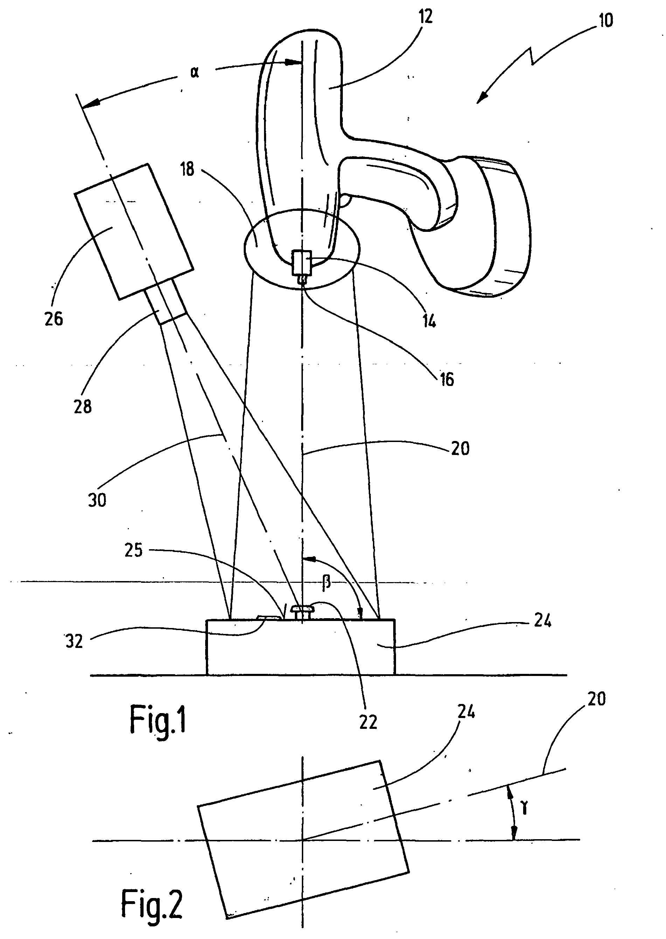

In Figur 1 ist eine erfindungsgemäße Schraubvorrichtung insgesamt mit der Ziffer 10 bezeichnet. Es soll ein Werkstück 24 bearbeitet werden, in das eine Schraube 22 eingedreht werden soll. Normalerweise befinden sich an einem derartigen Werkstück 24 eine Vielzahl von zu erstellenden Schraubverbindungen. Der Einfachheit halber ist an dieser Stelle jedoch lediglich eine einzige Schraube 22 dargestellt.

Am Schrauber 12 ist eine Ringleuchte 18 befestigt, deren optische Achse mit der Längsachse 20 des Schraubers 12 ausgerichtet ist. Bei der Ringleuchte 18 kann es sich beispielsweise um eine LED-Ringleuchte handeln. Zwischen der Kamera 26 bzw. dem Kameraobjektiv 28 und dem Schrauber 12 ist - allein aus Platzgründen - immer ein gewisser Winkel α (Winkel zwischen optischer Achse 30 der Kamera 26 und der Schrauberachse 20) vorhanden. Dabei beträgt der Winkel zwischen der Schrauberachse 20 und der Oberfläche 25 des Werkstücks 24 β und liegt im vorliegenden Fall bei etwa 90°.

Aus der Aufsicht gemäß Figur 2 ist ferner erkennbar, dass der Winkel zwischen der Schrauberachse 20 und dem Werkstück γ beträgt.

Die Winkelzusammenhänge werden berücksichtigt, um aus unterschiedlichen Blickwinkeln eine korrekte Identifizierung einer bestimmten Schraubstelle zu ermöglichen.

Es hat sich gezeigt, dass eine Identifizierung einer Schraubstelle lediglich anhand der vom Objektiv 28 der Kamera 26 aufgenommenen Rückstrahlung relativ kompliziert und aufwändig ist.

Zwar kann mit einer geeigneten Software eine Identifizierung einer Stelle, an der eine Verschraubung erzeugt werden soll, erfolgen, soweit ausreichende Unterscheidungsmerkmale bei unterschiedlichen Verschraubungsstellen an einem Werkstück zur Verfügung stehen.

Bei zahlreichen gleichartigen Verschraubungen an einem Werkstück stößt dieses Verfahren jedoch an seine Grenzen.

Eine deutlich einfachere und schnellere Identifizierung verschiedener Stellen, an denen jeweils eine Verschraubung erzeugt werden soll, ist durch die Verwendung einer Codierung an der Verschraubung selbst oder in ihrer unmittelbaren Umgebung gewährleistet.

Auf diese Weise lassen sich zahlreiche verschiedene Einsatzorte durch unterschiedliche Codierungen leicht voneinander unterscheiden. Als Codierung 32 wird hierbei ein DataMatrix-Code verwendet. Bei einem DataMatrix-Code handelt es sich um einen zweidimensionalen Code (2D) mit einem integrierten Algorithmus zur Fehlerkorrektur, wobei eine Codeerkennung aus unterschiedlichen Richtungen möglich ist.

Indem jeder Schraubstelle 22, 24 am Werkstück 24 ein eigener DataMatrix-Code zugeordnet wird, ist eine sichere Erkennung aller unterschiedlichen Schraubstellen des Werkstückes 24 gewährleistet.

Auf diese Weise ist sichergestellt, dass jede Verschraubung mit den korrekten Einstellparametern, wie etwa Anzugsmoment bzw. Drehwinkel erreicht werden kann

## Patentansprüche

1. Verfahren zum Überwachen von Schraubvorgängen, bei dem mittels eines Schraubwerkzeuges (12) eine Verschraubung hergestellt wird, und bei dem eine Identifizierung mindestens eines zu verschraubenden Objektes (22, 24) mittels optischer Bildverarbeitung erfolgt, wobei eine Codierung (32) auf dem Objekt (22, 24) oder in der Umgebung des Objektes (22, 24) ausgewertet wird, **dadurch gekennzeichnet, dass** ein DataMatrix-Code (32) ausgewertet wird.

2. Verfahren nach Anspruch 1, **dadurch gekennzeichnet, dass** elektromagnetische Strahlung im sichtbaren Bereich ausgewertet wird.

3. Verfahren nach 1 oder 2, **dadurch gekennzeichnet, dass** elektromagnetische Strahlung im nicht sichtbaren Bereich ausgewertet wird.

4. Verfahren nach Anspruch 3, **dadurch gekennzeichnet, dass** eine Codierung (32) verwendet wird, die nach Beleuchtung mit UV-Licht erfassbar ist.

5. Schraubvorrichtung, mit einem Schrauber (12) zum Verschrauben mindestens zweier Objekte (22, 24), und mit einer optischen Bilderfassungseinrichtung (26, 28) zur Identifizierung mindestens eines zu verschraubenden Objektes (22, 24), **dadurch gekennzeichnet, dass** die optischen Bilderfassungseinrichtung (26, 28) zur Identifizierung einer Codierung (32) in Form eines DataMatrix-Codes auf dem Objekt (22, 24) oder in der Umgebung des Objektes (22, 24) ausgebildet ist.

6. Vorrichtung nach Anspruch 5, **dadurch gekennzeichnet, dass** die optische Bilderfassungseinrichtung (26, 28) als Kamera ausgebildet ist.

7. Vorrichtung nach Anspruch 5 oder 6, **dadurch gekennzeichnet, dass** die Kamera (26) zur Auswertung von elektromagnetischer Strahlung im nicht sichtbaren Bereich ausgebildet ist.

8. Vorrichtung nach einem der Ansprüche 5 bis 7, **dadurch gekennzeichnet, dass** die Kamera (26) zur Auswertung von elektromagnetischer Strahlung im sichtbaren Bereich ausgebildet ist.

9. Vorrichtung nach einem der Ansprüche 5 bis 8, **dadurch gekennzeichnet, dass** die Bilderfassungseinrichtung (26, 28) zur Identifizierung einer Codierung (32) nach Beleuchtung mit UV-Licht ausgebildet ist.

10. Vorrichtung nach Anspruch 9, **dadurch gekennzeichnet, dass** die Bilderfassungseinrichtung (26, 28) zur Identifizierung einer Codierung (32), die eine UV-Farbe aufweist, nach Beleuchtung mit UV-Licht ausgebildet ist.

11. Vorrichtung nach einem der Ansprüche 5 bis 10, **dadurch gekennzeichnet, dass** eine Ring-Beleuchtungseinrichtung (18) vorgesehen ist.

12. Vorrichtung nach Anspruch 11, **dadurch gekennzeichnet, dass** die Ring-Beleuchtungseinrichtung (18) am Schrauber (12) aufgenommen ist.

## Claims

1. Method for monitoring screwing operations, in which a screw tool (12) is used to produce a screw connection, and in which at least one object to be screw-connected (22, 24) is identified using optical image processing, wherein a coding (32) on the object (22, 24) or in the vicinity of the object (22, 24) is evaluated, **characterized in that** a DataMatrix code (32) is evaluated.

2. Method according to Claim 1, **characterized in that** electromagnetic radiation in the visible range is evaluated.

3. Method according to Claim 1 or 2, **characterized in that** electromagnetic radiation in the non-visible range is evaluated.

4. Method according to Claim 3, **characterized in that** a coding (32) which is detectable after illumination with UV light is used.

5. Screw apparatus, having a screwdriver (12) for screw-connecting at least two objects (22, 24) and having an optical image capturing device (26, 28) for identifying at least one object to be screw-connected (22, 24), **characterized in that** the optical image capturing device (26, 28) is configured to identify a coding (32) in the form of a DataMatrix code on the object (22, 24) or in the vicinity of the object (22, 24).

6. Apparatus according to Claim 5, **characterized in that** the optical image capturing device (26, 28) is configured as a camera.

7. Apparatus according to Claim 5 or 6, **characterized in that** the camera (26) is configured to evaluate electromagnetic radiation in the non-visible range.

8. Apparatus according to one of Claims 5 to 7, **characterized in that** the camera (26) is configured to evaluate electromagnetic radiation in the visible range.

9. Apparatus according to one of Claims 5 to 8, **characterized in that** the image capturing device (26, 28) is configured to identify a coding (32) after illumination with UV light.

10. Apparatus according to Claim 9, **characterized in that** the image capturing device (26, 28) is configured to identify a coding (32) having a UV ink after illumination with UV light.

11. Apparatus according to one of Claims 5 to 10, **characterized in that** a ring illumination device (18) is provided.

12. Apparatus according to Claim 11, **characterized in that** the ring illumination device (18) is held on the screwdriver (12).

## Revendications

1. Procédé de surveillance d'opérations de vissage, dans lequel un vissage est formé au moyen d'un outil de vissage (12) et dans lequel l'identification d'au moins un objet (22, 24) à visser est effectuée par traitement optique d'images, un code (32) présent sur l'objet (22, 24) ou dans l'environnement de l'objet (22, 24) étant évalué,
**caractérisé en ce que**
un code (32) à matrice de données est évalué.

2. Procédé selon la revendication 1, **caractérisé en ce qu'**un rayonnement électromagnétique est évalué dans la plage visible.

3. Procédé selon les revendications 1 ou 2, **caractérisé en ce qu'**un rayonnement électromagnétique est évalué dans la plage non visible.

4. Procédé selon la revendication 3, **caractérisé en ce que** le code (32) utilisé peut être saisi après avoir été éclairé par de la lumière UV.

5. Dispositif de vissage doté d'une visseuse (12) qui visse au moins deux objets (22, 24) et d'un dispositif (26, 28) de saisie optique d'images servant à identifier au moins un objet (22, 24) à visser,
**caractérisé en ce que**
le dispositif (26, 28) de saisie optique d'images est configuré pour identifier un code (32) qui présente la forme d'un code à matrice de données présent sur l'objet (22, 24) ou dans l'environnement de l'objet (22, 24).

6. Dispositif selon la revendication 5, **caractérisé en ce que** le dispositif (26, 28) de saisie optique d'images est configuré comme caméra.

7. Dispositif selon les revendications 5 ou 6, **caractérisé en ce que** la caméra (26) est configurée pour évaluer un rayonnement électromagnétique dans la plage non visible.

8. Dispositif selon les revendications 5 à 7, **caractérisé en ce que** la caméra (26) est configurée pour évaluer un rayonnement électromagnétique dans la plage visible.

9. Dispositif selon les revendications 5 à 8, **caractérisé en ce que** le dispositif (26, 28) de saisie d'images est configuré pour identifier un code (32) après éclairage par de la lumière UV.

10. Dispositif selon la revendication 9, **caractérisé en ce que** le dispositif (26, 28) de saisie d'images est configuré pour identifier un code (32) qui présente une couleur en UV après éclairage par de la lumière UV.

11. Dispositif selon les revendications 5 à 10, **caractérisé en ce qu'**il présente un dispositif (18) d'éclairage en anneau.

12. Dispositif selon la revendication 11, **caractérisé en ce que** le dispositif (18) d'éclairage en anneau est logé sur la visseuse (12).
